# EUROPEAN PATENT APPLICATION

(11) **EP 4 707 543 A1**
(43) Date of publication of application: **11.03.2026**
(21) Application number: 25188855.8
(22) Date of filing: 10.07.2025
(51) Int. Cl.: F01D 9/06, F02C 7/00, F02C 9/18

(54) **SERVICE TUBE ASSEMBLY FOR TURBINE ENGINE**

(30) Priority: 11.07.2024 US 202418769956
(71) Applicant: PRATT & WHITNEY CANADA CORP., Longueuil, Québec J4G 1A1 (CA)
(72) Inventor: LEFEBVRE, Guy, St Bruno (CA); SYNNOTT, Remy, St Jean-sur-Richelieu (CA)
(74) Representative: Dehns

(57) **Abstract**

A method is provided during which a service tube assembly (118) is provided. The service tube assembly includes a fluid conduit (120), a bayonet fitting and a second fitting (124). The bayonet fitting is connected to the fluid conduit at a first end (128) of the fluid conduit. The second fitting is connected to the fluid conduit at a second end (130) of the fluid conduit. A coupler (138) of the bayonet fitting is slid axially along an axis (98, 142) into an aperture (106) of a receptacle (74). The service tube assembly is rotated about the axis to lock the bayonet fitting axially into the receptacle. The second fitting is attached to a boss (70) using one or more bolts (154).

## Description

### TECHNICAL FIELD

This disclosure relates generally to a turbine engine and, more particularly, to a service tube assembly for the turbine engine.

### BACKGROUND INFORMATION

A turbine engine may include a service tube for directing a fluid from one area of the turbine engine to another area of the turbine engine. Various types and configurations of service tubes are known in the art. While these known service tubes have various benefits, there is still room in the art for improvement.

### SUMMARY

According to an aspect of the present disclosure, an assembly is provided for a turbine engine. This assembly includes an engine structure, a fluid conduit, a first fitting and a second fitting. The engine structure includes a receptacle and a boss. The receptacle includes an aperture, a plurality of notches and a plurality of grooves. The aperture extends axially along an axis in the receptacle. The notches are arranged circumferentially about the axis and interspersed with the grooves. Each of the notches projects axially into the receptacle. Each of the grooves extends axially within the receptacle and circumferentially into the receptacle from a respective one of the notches. The fluid conduit extends longitudinally along a centerline from a conduit first end to a conduit second end. The first fitting is connected to the fluid conduit at the conduit first end and is mated with the receptacle. The first fitting fluidly couples the fluid conduit to the engine structure. The first fitting includes a coupler and a plurality of tabs. The coupler projects axially into the aperture. The tabs are arranged circumferentially about the axis. Each of the tabs is at least partially seated within a respective one of the grooves. The second fitting is connected to the fluid conduit at the conduit second end and is fastened to the boss by one or more fasteners. The second fitting fluidly couples the fluid conduit to the engine structure.

According to another aspect of the present disclosure, another assembly is provided for a turbine engine. This assembly includes an engine housing, a fluid conduit, a bayonet fitting and a flanged fitting. The engine housing includes a receptacle and a boss. The fluid conduit extends longitudinally along a centerline from a conduit first end to a conduit second end. The fluid conduit is configured from or otherwise includes rigid tubing. The bayonet fitting is permanently connected to the fluid conduit at the conduit first end. The bayonet fitting is inserted into and removably mated with the receptacle. The bayonet fitting fluidly couples the fluid conduit to a first volume in the engine housing. The flanged fitting is permanently connected to the fluid conduit at the conduit second end. The flanged fitting is removably attached to the boss by one or more fasteners. The flanged fitting fluidly couples the fluid conduit to a second volume in the engine housing.

According to still another aspect of the present disclosure, a method is provided during which a service tube assembly is provided. The service tube assembly includes a fluid conduit, a bayonet fitting and a second fitting. The bayonet fitting is connected to the fluid conduit at a first end of the fluid conduit. The second fitting is connected to the fluid conduit at a second end of the fluid conduit. A coupler of the bayonet fitting is slid axially along an axis into an aperture of a receptacle. The service tube assembly is rotated about the axis to lock the bayonet fitting axially into the receptacle. The second fitting is attached to a boss using one or more bolts.

The receptacle may include an aperture and a plurality of receptacle tabs. The aperture may extend axially along an axis in the receptacle. The receptacle tabs may be arranged circumferentially about the axis. Each of the receptacle tabs may project radially inward towards the axis and may extend partially circumferentially about the axis. The bayonet fitting may include a coupler and a plurality of fitting tabs. The coupler may project axially along the axis into the aperture. The fitting tabs may be arranged circumferentially about the axis. Each of the fitting tabs may be circumferentially overlapped by and axially engaged with a respective one of the receptacle tabs.

During mating of the first fitting with the receptacle, the tabs may be configured to slide axially into the notches as the coupler plugs axially into the aperture. The first fitting may be configured to rotate about the axis to move the tabs from the notches at least partially into the grooves.

A rotational position of the first fitting about the axis may be fixed when the second fitting is fastened to the boss by the one or more fasteners.

The first fitting may be secured to the receptacle without use of any fasteners.

The assembly may also include a seal element circumscribing the coupler and forming a seal interface between the coupler and a cylindrical surface of the receptacle.

The seal element may be a first seal element. The assembly may also include a second seal element circumscribing the coupler and further forming the seal interface between the coupler and the cylindrical surface of the receptacle.

The first fitting may be permanently connected to the fluid conduit at the conduit first end.

The second fitting may be permanently connected to the fluid conduit at the conduit second end.

The boss may include a boss flange. The second fitting may include a fitting flange abutted against the boss flange. Each of the one or more fasteners projects through the boss flange and the fitting flange.

The second fitting may abut against a face of the boss. The face of the boss may be parallel to the axis.

The face of the boss may be laterally offset from the axis.

A trajectory of the centerline may have one or more bends between the conduit first end to the conduit second end.

The assembly may also include a support connecting the fluid conduit to the engine structure. The support may be located longitudinally along an intermediate portion of the fluid conduit between the conduit first end and the conduit second end.

The axis may be a receptacle axis. The engine structure may also include: a wall extending axially along and circumferentially about a centerline axis with the boss projecting radially out from the wall; and a flange projecting radially away from the centerline axis to an outer distal end with the receptacle projecting axially out from the flange.

The receptacle axis may be parallel with the centerline axis.

The assembly may also include a fluid source fluidly coupled to the fluid conduit through the first fitting.

The fluid source may be configured as or otherwise include a compressor section of the turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft powerplant.
FIG. 2 is a partial perspective illustration of a service tube assembly mounted to an engine structure.
FIG. 3 is a partial sectional illustration of the aircraft powerplant at an interface between a flanged fitting and a flanged boss.
FIG. 4 is a partial sectional illustration of the aircraft powerplant at an interface between a bayonet fitting and a receptacle.
FIG. 5 is a partial perspective illustration of the bayonet fitting next to the receptacle prior to installation of the service tube assembly.
FIG. 6 is a partial perspective illustration of the bayonet fitting mated with the receptacle after the installation of the service tube assembly.
FIG. 7 is a partial perspective illustration depicting a rotation step during the installation of the service tube assembly.
FIG. 8 is a partial sectional illustration of the aircraft powerplant at the interface between the bayonet fitting and the receptacle with multiple seal elements.

### DETAILED DESCRIPTION

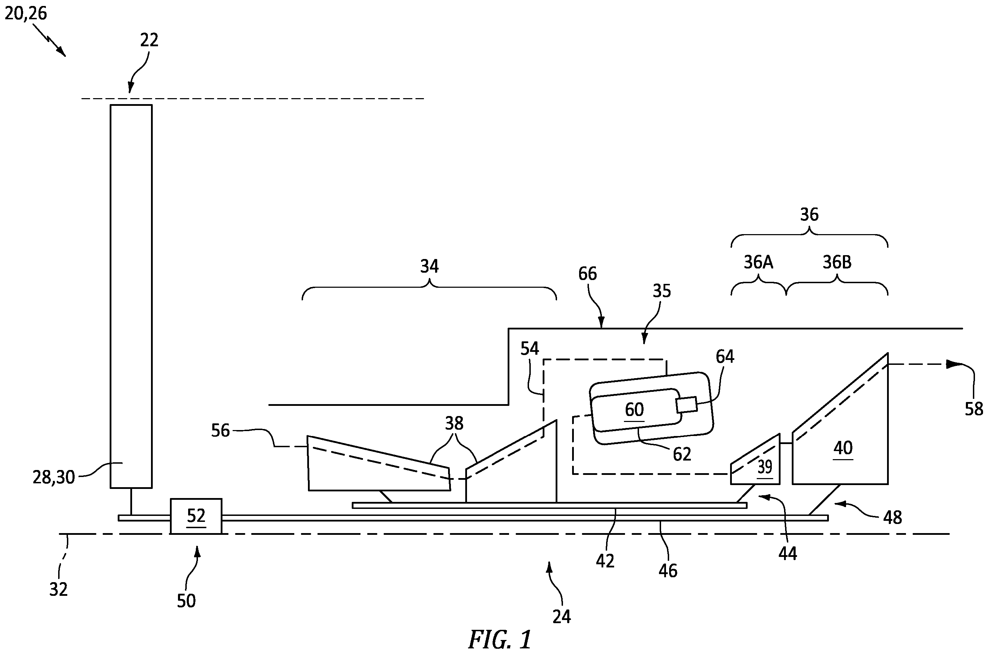

FIG. 1 illustrates a powerplant 20 for an aircraft. The aircraft may be an airplane, a helicopter, a drone (e.g., an unmanned aerial vehicle (UAV)) or any other manned or unmanned aerial vehicle or system. The powerplant 20 may be configured as, or otherwise included as part of, a propulsion and/or lift system for the aircraft. The powerplant 20 may also or alternatively be configured as, or otherwise included as part of, an electrical power system for the aircraft. The present disclosure, however, is not limited to aircraft applications. The powerplant 20, for example, may alternatively be configured as, or otherwise included as part of, an electrical power system for ground-based operation (e.g., an industrial powerplant), or otherwise. However, for ease of description, the powerplant 20 is described below as an aircraft powerplant.

The aircraft powerplant 20 of FIG. 1 includes a mechanical load 22 and a core 24 of a gas turbine engine 26, where the engine core 24 is configured to power operation of the mechanical load 22. The mechanical load 22 may be configured as or otherwise include a rotor 28 mechanically driven by the engine core 24. This driven rotor 28 may be a bladed propulsor rotor 30 for the aircraft propulsion and/or lift system. The propulsor rotor 30 may be an open propulsor rotor (e.g., an un-ducted propulsor rotor) or a ducted propulsor rotor. For example, where the turbine engine 26 is a turboprop engine, the open propulsor rotor may be a propeller rotor. Where the turbine engine 26 is a turboshaft engine, the open propulsor rotor may be a rotorcraft rotor such as a helicopter main rotor or a helicopter tail rotor. Where the turbine engine 26 is a turbofan engine, the ducted propulsor rotor may be a fan rotor. Alternatively, the driven rotor 28 may be configured as a generator rotor of an electric power generator for the aircraft electrical power system; e.g., an auxiliary power unit (APU) system. The present disclosure, however, is not limited to the foregoing exemplary mechanical loads nor to the foregoing exemplary turbine engines. The turbine engine 26, for example, may alternatively be configured as a turbojet engine, a propfan engine, a pusher fan engine or any other type of turbine engine operable to power the operation of the mechanical load 22 and/or generate thrust.

The turbine engine 26 extends axially along an axis 32 from a forward, upstream end of the turbine engine 26 to an aft, downstream end of the turbine engine 26. Briefly, this axis 32 may be a centerline axis of the turbine engine 26 and/or its engine core 24. The axis 32 may also be a rotational axis of one or more members of the turbine engine 26 and its engine core 24. The turbine engine 26 of FIG. 1 includes a compressor section 34, a combustor section 35 and a turbine section 36. The turbine section 36 of FIG. 1 includes a high pressure turbine (HPT) section 36A and a low pressure turbine (LPT) section 36A, which LPT section 36B of FIG. 1 is a power turbine (PT) section for powering operation of the mechanical load 22.

The compressor section 34 includes a compressor rotor 38. The HPT section 36A includes a high pressure turbine (HPT) rotor 39. The LPT section 36B includes a low pressure turbine (LPT) rotor 40. The compressor rotor 38, the HPT rotor 39 and the LPT rotor 40 each respectively include one or more arrays (e.g., stages) of rotor blades, where the rotor blades in each array are arranged circumferentially around and are connected to a respective rotor disk or hub. The rotor blades in each array, for example, may be formed integral with or mechanically fastened, welded, brazed and/or otherwise attached to the respective rotor disk and/or hub.

The compressor rotor 38 is coupled to and rotatable with the HPT rotor 39. The compressor rotor 38 of FIG. 1, for example, is connected to the HPT rotor 39 by a high speed shaft 42. At least (or only) the compressor rotor 38, the HPT rotor 39 and the high speed shaft 42 collectively form a high speed rotating assembly 44; e.g., a high speed spool of the turbine engine 26. The LPT rotor 40 of FIG. 1 is connected to a low speed shaft 46. At least (or only) the LPT rotor 40 and the low speed shaft 46 collectively form a low speed rotating assembly 48; e.g., a low speed spool / a power turbine spool of the turbine engine 26. This low speed rotating assembly 48 is further coupled to the driven rotor 28 through a drivetrain 50. This drivetrain 50 may be configured as a geared drivetrain, where a geartrain 52 (e.g., a transmission, a speed change device, an epicyclic geartrain, etc.) is disposed between and operatively couples the driven rotor 28 to the low speed rotating assembly 48 and its LPT rotor 40. With this arrangement, the driven rotor 28 may rotate at a different (e.g., slower) rotational velocity than the low speed rotating assembly 48 and its LPT rotor 40. However, the drivetrain 50 may alternatively be configured as a direct drive drivetrain, where the geartrain 52 is omitted. With such an arrangement, the driven rotor 28 may rotate at a common (the same) rotational velocity as the low speed rotating assembly 48 and its LPT rotor 40. Referring again to FIG. 1, each of the rotating assemblies 44, 48 and its members may be rotatable about the axis 32, and the axis 32 may be a centerline axis of each of the rotating assemblies 44, 48 and its members.

The turbine engine 26 of FIG. 1 includes a (e.g., annular) core flowpath 54. The core flowpath 54 extends longitudinally within the turbine engine 26 and its engine core 24 from an airflow inlet 56 into the core flowpath 54 to a combustion products exhaust 58 from the core flowpath 54. More particularly, the core flowpath 54 extends from the core inlet 56, sequentially through the compressor section 34, the combustor section 35, the HPT section 36A and the LPT section 36B, to the core exhaust 58.

During operation of the turbine engine 26, air is directed into the engine core 24 through the core inlet 56. This air entering the core flowpath 54 may be referred to as core air. This core air is compressed by the compressor rotor 38 and directed into a combustion chamber 60 (e.g., an annular combustion chamber) within a combustor 62 (e.g., an annular combustor) of the combustor section 35. Fuel is injected into the combustion chamber 60 by one or more fuel injectors 64 and mixed with the compressed core air to provide a fuel-air mixture. This fuel-air mixture is ignited and combustion products thereof flow through and sequentially drive rotation of the HPT rotor 39 and the LPT rotor 40. The rotation of the HPT rotor 39 drives rotation of the compressor rotor 38 and, thus, the compression of the air received from the core inlet 56. The rotation of the LPT rotor 40 drives rotation of the driven rotor 28. Where the driven rotor 28 is configured as the propulsor rotor 30, the rotation of this propulsor rotor 30 propels additional air (e.g., outside of the engine core 24 and its core flowpath 54) to provide aircraft thrust and/or aircraft lift. Where the driven rotor 28 is configured as the generator rotor, the rotation of this generator rotor may facilitate generation of electricity.

The turbine engine 26 is described above as a two spool turbine engine for ease of description. The present disclosure, however, is not limited to such an exemplary turbine engine. The low speed rotating assembly 48, for example, may include a low pressure compressor (LPC) rotor upstream of the compressor rotor 38 along the core flowpath 54, here a high pressure compressor (HPC) rotor. In another example, the turbine engine 26 may be configured as a single spool turbine engine where the rotating assembly 44 may be coupled to the driven rotor 28 through the drivetrain 50; e.g., the rotating assembly 48 may be omitted. In still other embodiments, the turbine engine 26 may include more than two rotating assemblies.

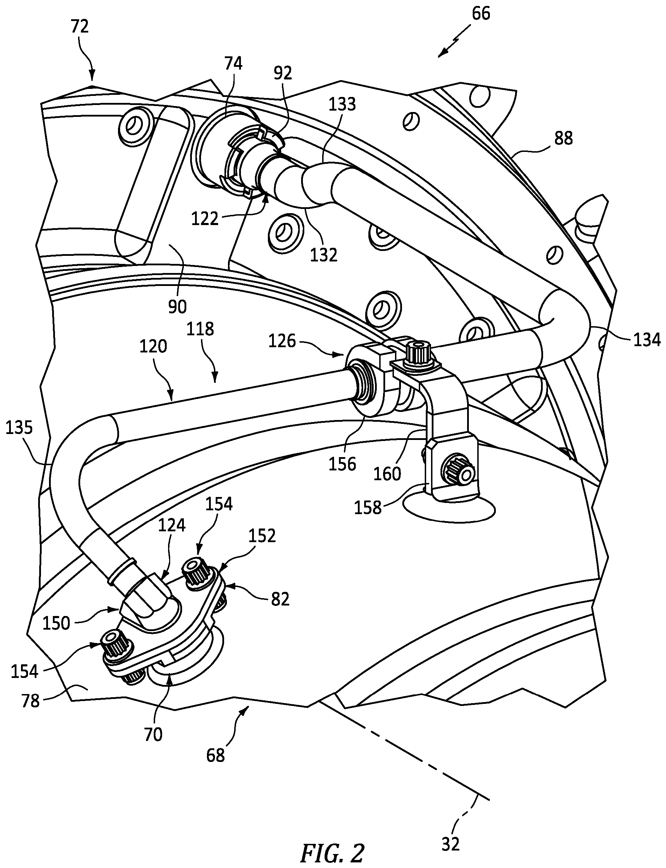

One or more of the engine rotors 38-40 may be housed within a stationary engine structure 66; e.g., an engine housing. The engine structure 66 of FIG. 1, for example, is disposed radially outboard of, axially overlaps and circumscribes the engine rotors 38-40 as well as the combustor 62. This engine structure 66 may be formed by a plurality of engine cases arranged and bolted or otherwise fastened together. Referring to FIG. 2, the engine structure 66 includes a structure wall 68, a mounting boss 70, a structure flange 72 and a mounting receptacle 74.

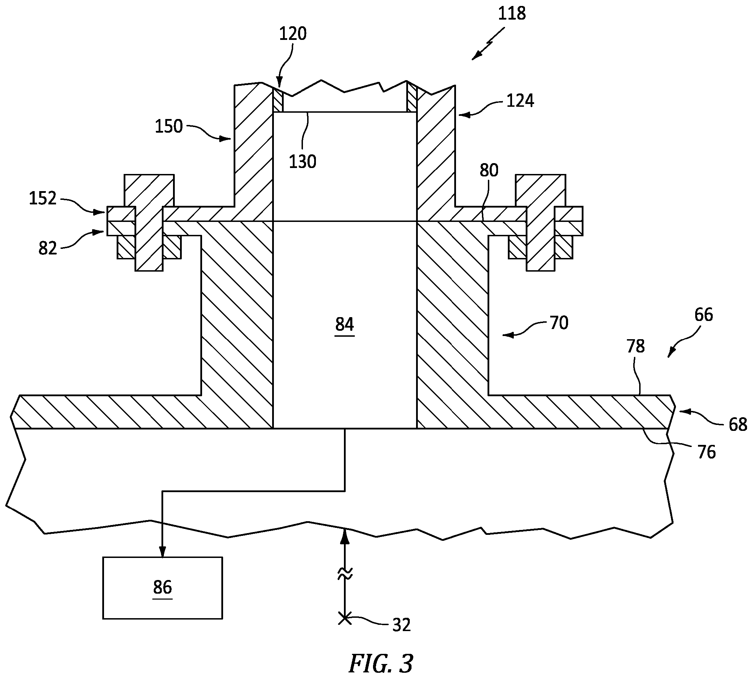

Referring to FIG. 3, the structure wall 68 extends axially along the axis 32. The structure wall 68 extends circumferentially about (e.g., completely around) the axis 32, providing the structure wall 68 with a full-hoop (e.g., tubular) geometry for example. The structure wall 68 extends radially from a radial inner side 76 of the structure wall 68 to a radial outer side 78 of the structure wall 68.

The mounting boss 70 may be formed integral with or otherwise connected to the structure wall 68. The mounting boss 70 is disposed radially outboard of the structure wall 68 adjacent the wall outer side 78. The mounting boss 70 of FIG. 3, for example, projects radially out (in a radial outward direction away from the axis 32) from the structure wall 68 to a face 80 of the mounting boss 70. This boss face 80 is formed by a boss flange 82 of the mounting boss 70.

A boss aperture 84 projects radially through the mounting boss 70 to an orifice (e.g., an inlet) in the boss face 80. The boss aperture 84 may also project radially through the structure wall 68. The boss aperture 84 of FIG. 3 is fluidly coupled to a volume 86 within the engine structure 66. This volume 86 may be a passage or a plenum for providing cooling air to one or more internal components of the turbine engine 26. Examples of these components include, but are not limited to, components within the turbine section 36 (see FIG. 1) such as turbine vanes, turbine blades, flowpath walls, shrouds, seals, bearings and/or the like.

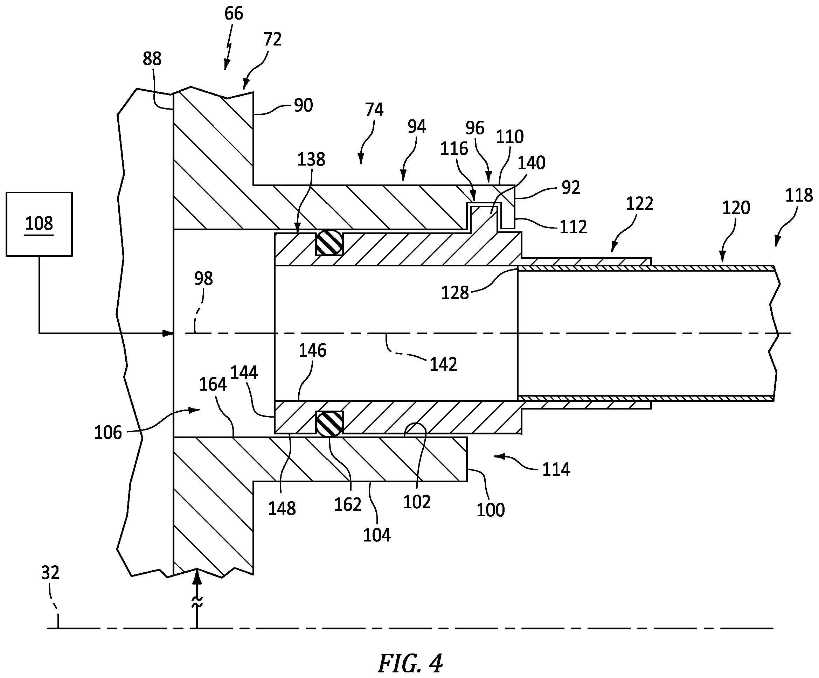

Referring to FIG. 2, the structure flange 72 projects radially outward away from the axis 32 / in a direction radially away from the structure wall 68 to a radial outer distal end 88 of the structure flange 72. Referring to FIG. 4, the structure flange 72 extends circumferentially about (e.g., completely around) the axis 32, providing the structure flange 72 with a full-hoop (e.g., tubular) geometry for example. The structure flange 72 extends axially along the axis 32 between axially opposing sides 88 and 90 of the structure flange 72, where the flange second side 90 of FIG. 2 axially faces the structure wall 68.

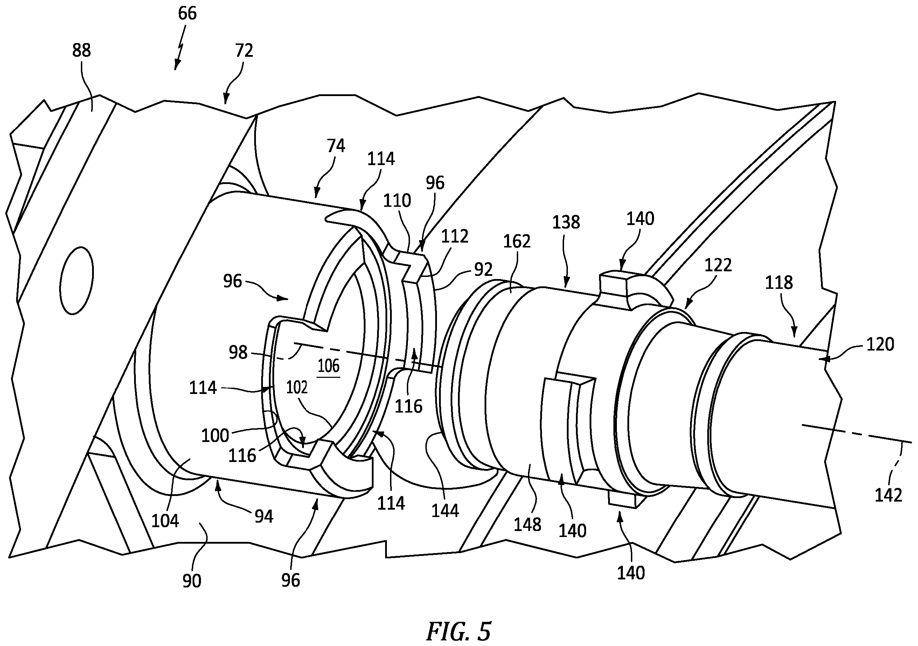

The mounting receptacle 74 may be formed integral with or otherwise connected to the structure flange 72. The mounting receptacle 74 is disposed radially outboard of the structure wall 68 and the mounting boss 70, axially adjacent the flange second side 90. The mounting receptacle 74 of FIG. 4, for example, projects axially along the axis 32 out from the structure flange 72 to an axial distal end 92 of the mounting receptacle 74. Referring to FIG. 5, the mounting receptacle 74 may be configured as a bayonet fitting receptacle. The mounting receptacle 74 of FIG. 5, for example, includes a tubular receptacle base 94 and one or more receptacle attachments 96.

The receptacle base 94 projects axially along an axis 98 of the mounting receptacle 74 out from the flange second side 90 (in a direction towards the receptacle distal end 92) to a distal end 100 of the receptacle base 94. Briefly, the receptacle axis 98 may be a centerline axis of the mounting receptacle 74. The receptacle axis 98 may also be parallel with, but radially offset outboard from, the axis 32 (see FIG. 2). A sidewall of the receptacle base 94 extends radially (relative to the receptacle axis 98) from a radial inner side 102 of the receptacle base 94 to a radial outer side 104 of the receptacle base 94. The sidewall of the receptacle base 94 extends circumferentially about (e.g., completely around) the receptacle axis 98, providing the receptacle base 94 with a full-hoop (e.g., tubular) geometry for example. With this arrangement, the base inner side 102 of FIG. 5 forms an aperture 106 (e.g., a center bore) in the mounting receptacle 74 and its receptacle base 94.

Referring to FIG. 4, the receptacle aperture 106 extends axially along the receptacle axis 98 in the receptacle base 94. In particular, the receptacle aperture 106 of FIG. 4 projects axially through the receptacle base 94 and to a volume 108 within the engine structure 66. This volume 108 may be a passage or a plenum for receiving the cooling air from a cooling air source. An example of the cooling air source is a bleed from the core flowpath 54, which bleed may be disposed along or downstream of the compressor section 34 of FIG. 1.

Referring to FIG. 5, the receptacle attachments 96 are arranged and may be equispaced circumferentially about the receptacle axis 98 in an array. Each of these receptacle attachments 96 includes a receptacle leg 110 and a receptacle tab 112. The receptacle leg 110 projects axially along the receptacle axis 98 out from the base distal end 100 to the receptacle distal end 92. The receptacle tab 112 is disposed at (e.g., on, adjacent or proximate) the receptacle distal end 92. Each receptacle tab 112 projects radially inward towards the receptacle axis 98 to a radial inner distal end of the respective receptacle tab 112. Each of the receptacle attachments 96 and its members 110 and 112 extend circumferentially about the receptacle axis 98 between circumferentially opposing sides of the respective receptacle attachment 96. With this arrangement, the receptacle attachments 96 of FIG. 5 form one or more receptacle notches 114 and one or more receptacle grooves 116.

The receptacle notches 114 are arranged and may be equispaced circumferentially about the receptacle axis 98 in an annular array. Each of the receptacle notches 114 is formed by and between a respective circumferentially neighboring pair of the receptacle attachments 96. Each receptacle notch 114 of FIG. 5, for example, extends circumferentially within the mounting receptacle 74 about the receptacle axis 98 between the respective circumferentially neighboring pair of the receptacle attachments 96. Each receptacle notch 114 of FIG. 5 extends radially through the mounting receptacle 74 from an exterior of the mounting receptacle 74 at the base outer side 104 to an interior of the mounting receptacle 74 at the base inner side 102. Each receptacle notch 114 projects axially along the receptacle axis 98 into the mounting receptacle 74, along the respective circumferentially neighboring pair of the receptacle attachments 96, from the receptacle distal end 92 to the base distal end 100.

The receptacle grooves 116 are arranged and may be equispaced circumferentially about the receptacle axis 98 in an annular array. These receptacle grooves 116 are circumferentially interspersed with the receptacle notches 114. Each receptacle groove 116, for example, is disposed between a circumferentially neighboring pair of the receptacle notches 114. Each receptacle notch 114 is disposed between a circumferentially neighboring pair of the receptacle grooves 116. Each receptacle groove 116 extends circumferentially within the mounting receptacle 74 about the receptacle axis 98, along a respective one of the receptacle attachments 96, between and to the respective circumferentially neighboring pair of the receptacle notches 114. Each receptacle groove 116 extends axially along the receptacle axis 98 within the mounting receptacle 74 from the base distal end 100 to a respective one of the receptacle tabs 112. Each receptacle groove 116 projects radially (in an outward direction away from the receptacle axis 98) into the mounting receptacle 74 from the interior of the mounting receptacle 74 / the base inner side 102 to a respective one of the receptacle legs 110.

Referring to FIG. 2, the turbine engine 26 includes a service tube assembly 118 removably attached to the mounting receptacle 74 and the mounting boss 70. This service tube assembly 118 includes a fluid conduit 120, a first fitting 122 and a second fitting 124. The service tube assembly 118 of FIG. 2 also includes a conduit support 126.

The fluid conduit 120 may be configured as a length of relatively stiff, rigid tubing; e.g., metal tubing. This tubing may be formed by a single tube, or multiple tubes arranged longitudinally end-to-end and fluidly coupled together; e.g., at an intermediate location longitudinally along the fluid conduit 120.

The fluid conduit 120 of FIG. 2 extends longitudinally along a centerline of the fluid conduit 120 from a first end 128 of the fluid conduit 120 (see FIG. 4) to a second end 130 of the fluid conduit 120 (see FIG. 3). The conduit centerline of FIG. 2 follows a non-straight (e.g., tortuous) trajectory. The trajectory of the conduit centerline, for example, may include one or more bends; e.g., 132-135. One or more of these bends (e.g., 132, 133) may have a bend angle between ten degrees (10°) and sixty degrees (60°). One or more of the bends (e.g., 134, 135) may have a bend angle between sixty degrees (60°) and one-hundred and twenty degrees (120°). With this arrangement, the conduit second end 130 (e.g., at the second fitting 124) may be laterally offset (e.g., generally circumferentially about the axis 32) from the conduit first end 128 (e.g., at the first fitting 122). The conduit second end 130 may be radially inboard of the conduit first end 128. In addition, while the conduit centerline at the conduit first end 128 is coaxial with the receptacle axis 98 (following installation of the service tube assembly 118 with the engine structure 66), the conduit centerline at the conduit second end 130 may be pitched diagonally / radially inward towards the axis 32. The present disclosure, however, is not limited to the foregoing exemplary fluid conduit configuration.

The first fitting 122 is (e.g., permanently) connected to the fluid conduit 120 at the conduit first end 128 (see FIG. 4). The first fitting 122, for example, may be swagged, crimped, brazed and/or otherwise fixedly attached to the fluid conduit 120 at the conduit first end 128. Referring to FIG. 5, the first fitting 122 may be configured as a bayonet fitting. The first fitting 122 of FIG. 5, for example, includes a tubular fitting coupler 138 (e.g., a fitting nipple, a male coupler, etc.) and one or more fitting tabs 140.

The fitting coupler 138 projects axially along an axis 142 of the first fitting 122 (away from the fluid conduit 120) to a distal end 144 of the first fitting 122 and its fitting coupler 138. Briefly, the fitting axis 142 may be a centerline axis of the first fitting 122. The fitting axis 142 may also be coaxial with the receptacle axis 98 (following the installation of the service tube assembly 118 with the engine structure 66). A sidewall of the fitting coupler 138 extends radially from a radial inner side 146 of the fitting coupler 138 (see FIG. 4) to a radial outer side 148 of the fitting coupler 138. The sidewall of the fitting coupler 138 extends circumferentially about (e.g., completely around) the fitting axis 142, providing the fitting coupler 138 with a full-hoop (e.g., tubular) geometry for example.

The fitting tabs 140 are arranged and may be equispaced circumferentially about the fitting axis 142 in an annular array. Each of these fitting tabs 140 projects radially (in a radial outward direction away from the fitting axis 142) out from the fitting coupler 138 and its coupler outer side 148 to a radial outer distal end of the respective fitting tab 140. Each fitting tab 140 extends circumferentially about the fitting axis 142 between opposing circumferential sides of the respective fitting tab 140. Each fitting tab 140 extends axially along the fitting axis 142 between opposing axial sides of the respective fitting tab 140. Each fitting tab 140 of FIG. 5 is axially spaced from the fitting distal end 144 by a non-zero distance; e.g., equal to or greater than about forty percent (40%), fifty percent (50%), sixty percent (60%) or more of an axial length of the first fitting 122.

Referring to FIG. 2, the second fitting 124 is (e.g., permanently) connected to the fluid conduit 120 at the conduit second end 130 (see FIG. 3). The second fitting 124, for example, may be swagged, crimped, brazed and/or otherwise fixedly attached to the fluid conduit 120 at the conduit second end 130. The second fitting 124 may be configured as a flanged fitting. The second fitting 124 of FIG. 2, for example, includes a tubular fitting base 150 and a fitting flange 152. The fitting base 150 is connected to the fluid conduit 120, and the fitting flange 152 is disposed at a distal end of the second fitting 124.

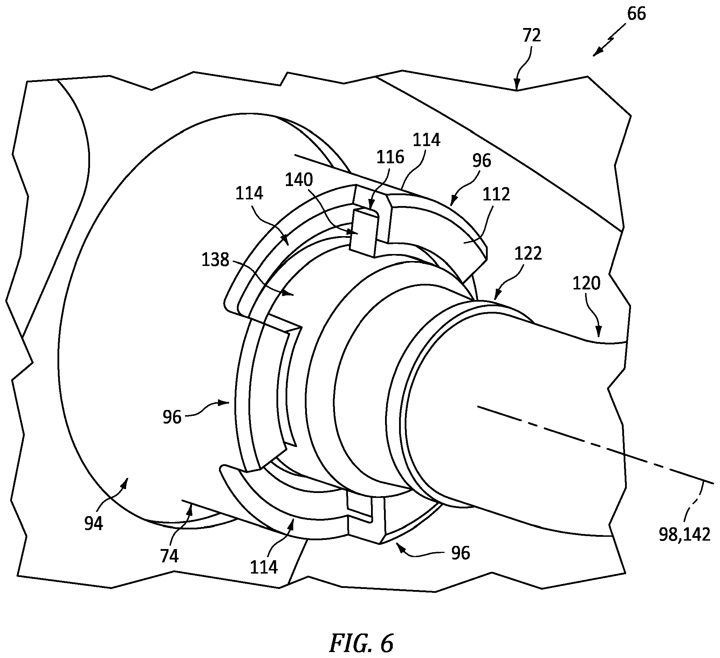

During installation of the service tube assembly 118, the first fitting 122 is mated with the mounting receptacle 74. The fitting coupler 138 of FIG. 5, for example, is plugged (e.g., inserted axially) into the mounting receptacle 74 and its receptacle aperture 106. As the fitting coupler 138 translates axially along the axes 98, 142 into the receptacle aperture 106, the fitting tabs 140 slide axially along the axes 98, 142 respectively into the receptacle notches 114. Referring to FIG. 6, the first fitting 122 is then rotated about the axes 98, 142 to move the fitting tabs 140 out of the receptacle notches 114 at least partially or completely respectively into receptacle grooves 116. With this arrangement, the fitting tabs 140 are captured axially between the respective receptacle tabs 112 and the receptacle base 94. The first fitting 122 is thereby axially locked into the mounting receptacle 74. Here, the first fitting 122 is attached to the structure flange 72 without use of any fasteners; e.g., bolts, nuts, threaded connections or the like. In other words, no additional fasteners are needed to directly attach the first fitting 122 to the engine structure 66 and its structure flange 72.

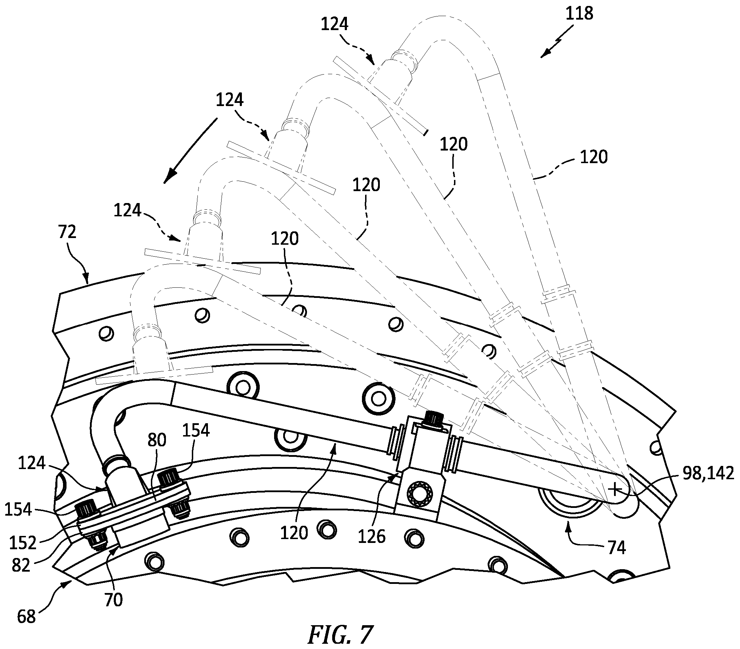

As the first fitting 122 is rotated about the axes 98, 142 into its locked position, the second fitting 124 of FIG. 7 may be simultaneously mated the mounting boss 70. The fitting flange 152, for example, is abutted against the boss flange 82. Referring to FIG. 2, the fitting flange 152 may then be mechanically fastened to the mounting boss 70 and its boss flange 82 by one or more fasteners 154; e.g., bolts, nuts and bolts, etc. Once the second fitting 124 is fastened to the mounting boss 70, the service tube assembly 118 and its members 120, 122 and 124 may no longer be capable of rotating about the axes 98, 142. The fastening of the second fitting 124 to the mounting boss 70 may thereby prevent unintentional disconnection of the first fitting 122 from the mounting receptacle 74. By obviating the need for fasteners to attach the first fitting 122 to the engine structure 66, a form factor of the structure flange 72 may be reduced and/or the first fitting 122 may be located in areas with reduced access or room for maneuvering tools.

The fluid conduit 120 may be further mounted to the engine structure 66 and its structure wall 68 by the conduit support 126. This conduit support 126 is removably connected to the fluid conduit 120 at an intermediate location between the first fitting 122 and the second fitting 124. Here, the conduit support 126 includes a hose clamp 156, a structure mount 158 and an extension 160. The present disclosure, however, is not limited to such an exemplary conduit support arrangement. Moreover, it is contemplated the service tube assembly 118 may alternatively be configured without the conduit support 126 where, for example, the longitudinal length of the fluid conduit 120 is relatively short.

Following installation, the first fitting 122 of FIG. 4 fluidly couples the fluid conduit 120 to the volume 108. The second fitting 124 of FIG. 3 fluidly couples the fluid conduit 120 to the volume 86. The service tube assembly 118 and its members 120, 122 and 124 thereby fluidly couple the volume 108 (see FIG. 4) to the volume 86 (see FIG. 3).

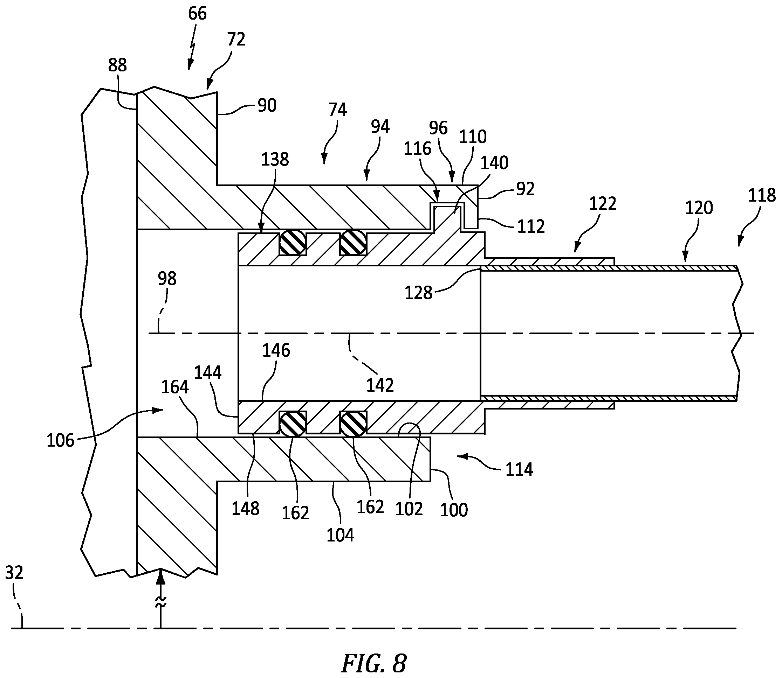

In some embodiments, referring to FIGS. 4 and 8, the first fitting 122 may be configured with one or more seal elements 162. Examples of the seal elements 162 include, but are not limited to, O-rings, C-seals or other ring seals. Each seal element 162 may be annular and circumscribe the fitting coupler 138. The seal element(s) 162 may thereby form a seal interface between the fitting coupler 138 and a (e.g., cylindrical) surface 164 of the mounting receptacle 74 at the base inner side 102.

In some embodiments, referring to FIG. 7, a plane of the boss face 80 may be parallel with the axes 98, 142. The boss face 80 of FIG. 7, however, is laterally offset from the axis 32. This arrangement may facilitate the mating of the flanges 82 and 152 during the installation of the service tube assembly 118; e.g., during the rotation of the assembly elements 120, 122 and 124 about the axes 98, 142.

While the service tube assembly 118 is described above as flowing a fluid such as compressed air, the service tube assembly 118 of the present disclosure is not limited thereto. It is contemplated, for example, the service tube assembly 118 may alternatively flow various other gases and/or liquids from one area of the turbine engine 26 to another area of the turbine engine 26.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for a turbine engine, comprising:
an engine structure including a receptacle and a boss, the receptacle including an aperture, a plurality of notches and a plurality of grooves, the aperture extending axially along an axis in the receptacle, the plurality of notches arranged circumferentially about the axis and interspersed with the plurality of grooves, each of the plurality of notches projecting axially into the receptacle, each of the plurality of grooves extending axially within the receptacle and circumferentially into the receptacle from a respective one of the plurality of notches;
a fluid conduit extending longitudinally along a centerline from a conduit first end to a conduit second end;
a first fitting connected to the fluid conduit at the conduit first end and mated with the receptacle, the first fitting fluidly coupling the fluid conduit to the engine structure, the first fitting including a coupler and a plurality of tabs, the coupler projecting axially into the aperture, the plurality of tabs arranged circumferentially about the axis, and each of the plurality of tabs at least partially seated within a respective one of the plurality of grooves; and
a second fitting connected to the fluid conduit at the conduit second end and fastened to the boss by one or more fasteners, the second fitting fluidly coupling the fluid conduit to the engine structure.

2. The assembly of claim 1, wherein, during mating of the first fitting with the receptacle, the plurality of tabs are configured to slide axially into the plurality of notches as the coupler plugs axially into the aperture, and the first fitting is configured to rotate about the axis to move the plurality of tabs from the plurality of notches at least partially into the plurality of grooves.

3. The assembly of claim 2, wherein a rotational position of the first fitting about the axis is fixed when the second fitting is fastened to the boss by the one or more fasteners.

4. The assembly of claim 1, 2, or 3, wherein the first fitting is secured to the receptacle without use of any fasteners.

5. The assembly of any preceding claim, further comprising a seal element circumscribing the coupler and forming a seal interface between the coupler and a cylindrical surface of the receptacle.

6. The assembly of claim 5, wherein the seal element is a first seal element, and the assembly further comprises a second seal element circumscribing the coupler and further forming the seal interface between the coupler and the cylindrical surface of the receptacle.

7. The assembly of any preceding claim, wherein the first fitting is permanently connected to the fluid conduit at the conduit first end; and/or
wherein the second fitting is permanently connected to the fluid conduit at the conduit second end; and/or
wherein
the boss comprises a boss flange;
the second fitting comprises a fitting flange abutted against the boss flange; and
each of the one or more fasteners projects through the boss flange and the fitting flange.

8. The assembly of any preceding claim, wherein
the second fitting abuts against a face of the boss; and
the face of the boss is parallel to the axis.

9. The assembly of claim 8, wherein the face of the boss is laterally offset from the axis.

10. The assembly of any preceding claim, wherein a trajectory of the centerline has one or more bends between the conduit first end to the conduit second end; and/or
further comprising a support connecting the fluid conduit to the engine structure, the support located longitudinally along an intermediate portion of the fluid conduit between the conduit first end and the conduit second end.

11. The assembly of any preceding claim, wherein the axis is a receptacle axis, and the engine structure further includes:
a wall extending axially along and circumferentially about a centerline axis with the boss projecting radially out from the wall; and
a flange projecting radially away from the centerline axis to an outer distal end with the receptacle projecting axially out from the flange, and optionally
wherein the receptacle axis is parallel with the centerline axis.

12. The assembly of any preceding claim, further comprising a fluid source fluidly coupled to the fluid conduit through the first fitting, and optionally
wherein the fluid source comprises a compressor section of the turbine engine.

13. An assembly for a turbine engine, comprising:
an engine housing including a receptacle and a boss;
a fluid conduit extending longitudinally along a centerline from a conduit first end to a conduit second end, the fluid conduit comprising rigid tubing;
a bayonet fitting permanently connected to the fluid conduit at the conduit first end, the bayonet fitting inserted into and removably mated with the receptacle, and the bayonet fitting fluidly coupling the fluid conduit to a first volume in the engine housing; and
a flanged fitting permanently connected to the fluid conduit at the conduit second end, the flanged fitting removably attached to the boss by one or more fasteners, and the flanged fitting fluidly coupling the fluid conduit to a second volume in the engine housing.

14. The assembly of claim 13, wherein
the receptacle includes an aperture and a plurality of receptacle tabs, the aperture extends axially along an axis in the receptacle, the plurality of receptacle tabs are arranged circumferentially about the axis, each of the plurality of receptacle tabs projects radially inward towards the axis and extends partially circumferentially about the axis; and
the bayonet fitting includes a coupler and a plurality of fitting tabs, the coupler projects axially along the axis into the aperture, the plurality of fitting tabs are arranged circumferentially about the axis, and each of the plurality of fitting tabs is circumferentially overlapped by and axially engaged with a respective one of the receptacle tabs.

15. A method, comprising:
providing a service tube assembly, the service tube assembly including a fluid conduit, a bayonet fitting and a second fitting, the bayonet fitting connected to the fluid conduit at a first end of the fluid conduit, and the second fitting connected to the fluid conduit at a second end of the fluid conduit;
sliding a coupler of the bayonet fitting axially along an axis into an aperture of a receptacle;
rotating the service tube assembly about the axis to lock the bayonet fitting axially into the receptacle; and
attaching the second fitting to a boss using one or more bolts.
